# EUROPEAN PATENT APPLICATION

(11) **EP 1 905 687 A2**
(43) Date of publication of application: **02.04.2008**
(21) Application number: 07117133.4
(22) Date of filing: 25.09.2007
(51) Int. Cl.: B63B 35/79

(54) **Kite, method of generating power using such a kite, method of providing driving force to a vehicle using such a kite, vehicle provided with such a kite, power generation assembly comprising such a kite**

(30) Priority: 27.09.2006 US 847371 P
(71) Applicant: Technische Universiteit Delft, 2628 BL Delft (NL)
(72) Inventor: Ockels, Wubbo Johannes, 1016 EV, Amsterdam (NL)
(74) Representative: Hatzmann, Martin

(57) **Abstract**

Kite (1) having a main body (K) provided with at least a first and a second connection cable (4,5) and at least one main pulling cable (6), the at least first and second connection cables (4,5) each having a first (4a,5a) and a second end (4b,5b), the first ends of the at least first and second connection cables being connected to the main body of the kite at different positions of the main body, the second ends of the at least first and second connection cables being connected to the main pulling cable, wherein at least one regulator (2,3) is provided between the first ends of the connection cables and the main body and/or between the second ends of the connection cables and the at least one main pulling cable, a control being provided for controlling the at least one regulator so that the kite is steereable. The invention further relates to a method of generating power using such a kite, a method of providing driving force to a vehicle using such a kite, a vehicle provided with such a kite and a power generation assembly comprising such a kite.

## Description

The invention relates to a kite having a main body provided with at least a first and a second connection cable and at least one main pulling cable, the at least first and second connection cables each having a first and a second end, the first ends of the at least first and second connection cables being connected to the main body of the kite at different positions of the main body, the second ends of the at least first and second connection cables being connected to the main pulling cable.

Such kites are known and can for example be used to convert wind energy into mechanical energy that can be used for a variety of applications, like generation of electricity, pulling vessels, various sports like kite surfing etc. To use known kites for the mentioned applications, the control of the kite is of importance. The common way of controlling a kite is manually controlling by pulling the at least one pulling cable.

It is an object of the invention to provide a kite with an improved way of controlling. In order to achieve this object the kite according to the invention is provided with at least one regulator between the first ends of the connecting cables and the main body and/or between the second ends of the connecting cables and the at least one main pulling cable, a control being provided for controlling the at least one regulator so that the kite is steereable.

By using at least one regulator and a control for controlling said regulator, the movements of the kite can be arranged automatically without manual pulling of the cables. The combination of at least one regulator and a control provides full automatic control of the kite. Said combination can be used to steer regular kites, for instance surf kites of Naish of Lynn type or other known kites.

According to a further elaboration of the invention, the at least one regulator is arranged for displacing the first end of one of said connecting cables relative to the first end of another one of said connecting cables. It is also possible, in a further elaboration of the invention, that the at least one regulator is arranged for displacing the second end of one of said connecting cables relative to the second end of another one of said connecting cables. By displacing one of the ends of the first or the second connection cable with respect to the similar end of the other connection cable, the attachment point of said cable is shifted with respect to the points where the external forces, the aero-dynamical and gravitational forces, apply to the kite. That shift causes the shape of the kite to change which enables movement of the kite. For instance to enable the kite to get in a roll yaw motion or in a pitch, or any other common movement of a kite.

According to a further elaboration of the invention, the at least one regulator is arranged for decreasing and increasing the length of a connection cable relative to the length of another one of said connecting cables. By increasing and/or decreasing the length of a connection cable, the kite will change its position relative to the applied forces to the kite, resulting in controlled movement of the kite.

According to another aspect of the invention, the control is a wireless remote control, wherein the at least one regulator has its own power supply and a receiver and optionally a transmitter for wireless communication with the remote control. Such a wireless remote control enables control of the kite at different altitudes, also at high altitudes. A further advantage is that when using such a control, only one relatively long cable is needed, just the one connecting the kite to the ground. The connection cables can be relatively short. Furthermore, such a control can control a plurality of kites at the same time, for instance each kite individually or all kites as a whole, the kites being interconnected.

In a further elaboration of the invention, the regulator comprises a sliding mechanism that provides sliding of the end of the connection cable relative to the regulator. The sliding mechanism can be arranged at both lower ends of the kite. The displacement of at least one of the ends of the connection cables is arranged by sliding a small carriage over the sliding mechanism. Preferably, the small carriage can be moved along the sliding mechanism in both directions. Also the small carriages of both sliding mechanisms can be moved relative to the respective sliding mechanisms at the same time.

According to another aspect of the invention, in use a direction of displacement of the at least one end of the cable relative to another similar end of another cable, that are displaceable connected to the regulator, and/or a direction of displacement of the at least one end of the cable, that is displaceable connected to the regulator, relative to said regulator is substantially perpendicular to a direction of tensile force in said cable being displaced. Due to the perpendicular displacement of the end of the cable with respect to the tensile force in said cable to be displaced, the force needed to enable said displacement can be relatively small. It is clear that with the end of the cable is meant the first end of the first or second connecting cable, the second end of the first or second connecting cable, the first end of the main pulling cable etc., depending on the location and the way of functioning of the regulator and the cables that are displaceable connected to said regulator.

According to a further elaboration of the invention, the kite is provided with at least one sensor that is adapted to measure at least one parameter of the following: position of the kite, altitude of the kite, wind conditions. Such parameters can be of influence for the behaviour of the kite and consequently for the needed steering movements, thus the needed control operations. In order to take account of such parameters it is possible, according to another aspect of the invention, that the control is adapted to control the at least one regulator in dependence of a measurement of the at least one sensor. It is also possible that the control is adapted to control the at least one regulator in dependence of controlling software. Due to such controlling software stability and steering of the kite are provided automatically. According to the values of the parameters the software generates controlling operations that are transmitted to a receiver on the regulator.

The invention further relates to a method of generating power, wherein the method comprises providing a kite of the above-mentioned type connecting the main pulling cable of the kite to a power generator, controlling the kite so that a desired path of movement of the kite is obtained. Using an above-mentioned kite to generate power is advantageous, because said kite can be used to exploit wind energy at high altitudes without needing any tall structure, as does a wind turbine, to bring the kite to that altitude. In general the wind is more strongly at the power generating heights of a kite than for example at the effective power generating height of a fixed wind turbine. Therefore, generating power with a kite is very efficient.

In a further elaboration of the invention, the controlling of the kite is such that during a first part of the desired path a high pulling force is exerted on the main pulling cable and that during a second part of the desired path a smaller pulling force is exerted on the main pulling cable, wherein during the first part the kite moves away from the power generator and wherein during the second part the kite moves towards the power generator. Due to a created higher force during the first part of the path than during the second part of the path, a net energy is transferred during the first part of the path.

The invention also relates to a method of providing driving force to a vehicle, the method comprising providing a kite of the above-mentioned type connecting the pulling cable of the kite to the vehicle and operating the control of the kite such that the vehicle is pulled by the pulling cable along a desired path with a desired speed.

In further elaboration of the invention, the vehicle is chosen from the group consisting of a car, a bike, a buggy, a boat, an aircraft.

Furthermore, the invention relates to a vehicle provided with at least one kite of the above-mentioned type for driving the vehicle.

The invention also relates to a power generation assembly comprising a power generator and at least one kite of the above-mentioned type driveably connected to the power generator.

Such methods, vehicles and power generation assembly provide similar advantages as mentioned at the description of the kite according to the invention.

The invention will be further elucidated by means of exemplary embodiments with reference to the accompanying drawings in which:
Fig. 1 shows a perspective view of a kite provided with two regulators;
Fig. 2 shows a perspective view of a regulator;
Fig. 3 shows a perspective view of a second embodiment of the kite according to the invention;
Fig. 4 shows a perspective view of a third embodiment of the kite according to the invention; and
Fig. 5 shows a perspective view of a fourth embodiment of the kite according to the invention.

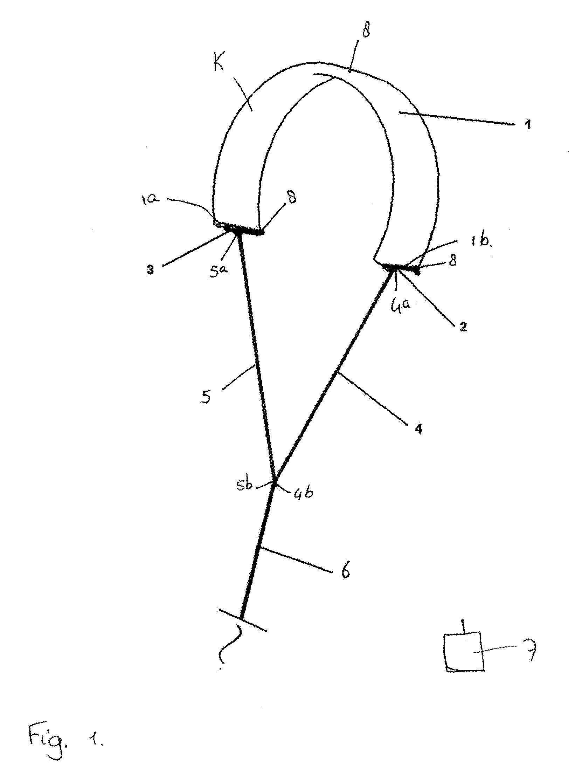

In figure 1 a kite 1 is shown comprising two regulators 2, 3 that are provided between the first ends 4a, 5a and both lower ends 1a, 1b of the main body K of the kite 1. The regulators 2, 3 are fixedly connected to said lower ends 1a, 1b. The connection cables 4, 5 are connected with a second end 4b, 5b to one main pulling cable 6. The main pulling cable 6 provides the connection of the kite 1 to the ground or an apparatus situated on the ground, for instance a vehicle, a power generating assembly or the like. Thus, the at least one regulator 2, 3 is provided between the first ends 4a, 5a of the connection cables 4, 5 and the main body K of the kite 1, thereby connecting the connection cables 4, 5 to the main body K via the regulators 2, 3.

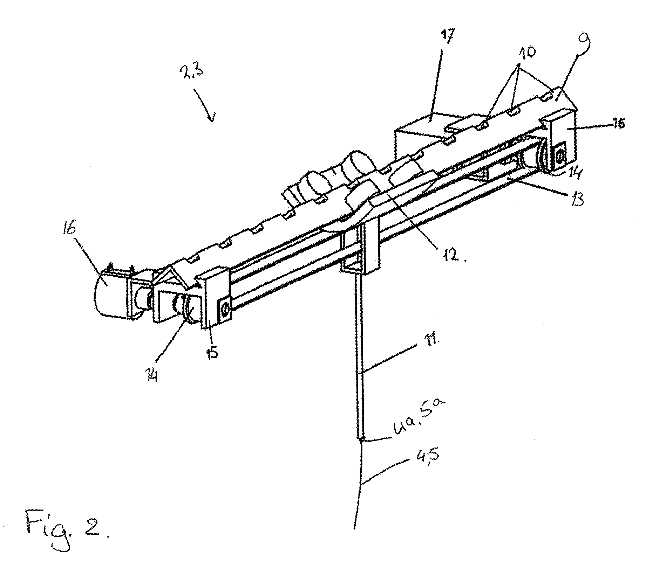

The regulators 2, 3 are arranged as a sliding mechanism 2, 3, wherein the first ends 4a, 5a of the respective connection cables 4, 5 are slidably received in said sliding mechanism 2, 3. The sliding mechanism 2, 3 will be further explained at the description of figure 2.

The kite 1 can be controlled by a remote control 7, possibly operated by a user. The remote control 7 can be a computer, a joystick or any other kind of known controls. The remote control 7 can also be operated automatically based on controlling software and in dependence of continuously measured parameters of the kite 1. Therefore, at least one sensor 8 can be provided on said kite 1, or on another location, for instance on the regulators 2, 3. The sensor 8 is adapted to measure parameters like altitude of the kite 1, position of the kite 1, or wind conditions around the kite 1 or other parameters that are of importance to the behaviour of the kite 1.

When the user operates the control 7, for instance for steering the kite to the right, the position of the end 4a of the first connecting cable 4 relative to the position of the end 5a of the second connecting cable 5 is changed by sliding said end 4a along the sliding mechanism 2. Consequently, the attachment points of the ends 4a, 5a of the connection cables 4, 5 change with respect to the application point of the external forces to the kite 1, i.e. aero-dynamical and gravitational forces, so as to enable the desired movement of the kite 1.

Figure 2 shows a more detailed perspective view of a regulator 2, 3, arranged as a sliding mechanism 2, 3. The sliding mechanism 2, 3 comprises a sliding rail 9 with attachment points 10 for attaching the sliding mechanism 2, 3 to a kite 1. The end 4a, 5a of the connection cable 4, 5 is slidably arranged in said sliding mechanism 2, 3. Therefore, the end 4a, 5a of the connection cable 4, 5 is connected to a connecting element 11 that comprises a sliding carriage 12, that is slidable over the sliding rail 9. The sliding carriage 12 is driven by an endless toothbelt 13, guided over two toothbelt wheels 14, that are arranged in housings 15. In another embodiment of the invention it is possible that the end 4a, 5a of the connecting cable 4, 5 is fixedly connected to the sliding carriage 12. When the control 7 is operated, by a user or via controlling software, a signal is send to a receiver 16 on the sliding mechanism 2, 3. The receiver 16 transmits the signal to the power supply 17, for instance a servomotor that is adapted to move the sliding carriage 12 along the sliding rail 9 according to the signal transmitted by said receiver 16. Preferably, the direction of movement of sliding carriage 12 along the sliding rail 9 to move the first end 4a, 5a of the connecting cable 4, 5 is perpendicular to the tensile force of the connecting cable 4, 5. Then, the force needed to enable movement of the sliding carriage 12 will be relatively low.

It is also possible that the sliding mechanism 2, 3 comprises a transmitter (not shown) for returning a signal to the control 7. Naturally, it is possible to move the sliding carriage 12 relative to the sliding rail 9 with another kind of moving element known to the skilled person. Also another mechanism to move the ends 4a, 5a of the connection cables 4, 5 with respect to the application point of forces to the kite are to be understood to be part of the invention.

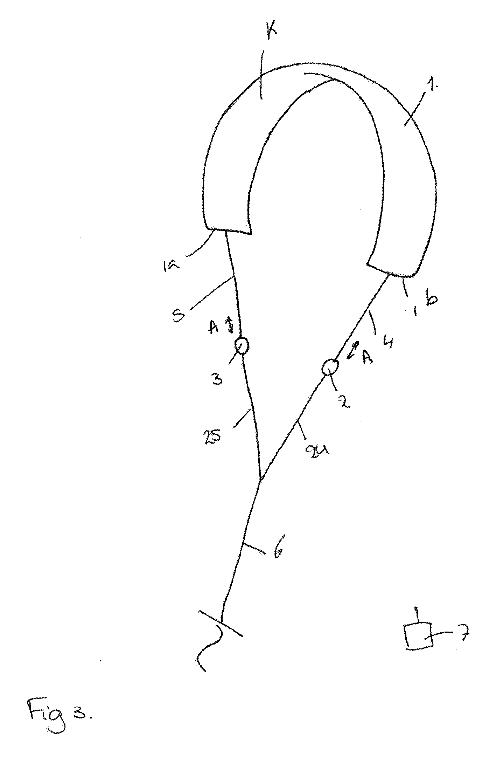

In figure 3 a second embodiment of the kite 1 according to the invention is shown. The main pulling cable 6 is connected via connection cables 4, 5 to the main body K at different positions 1a, 1b of the main body K of the kite 1. Two regulators 2, 3 are provided at the second ends 4b, 5b of the connection cables 4, 5. Between said regulators 2, 3 and the main pulling cable 6, intermediate cables 24, 25 are provided. It is also possible that the regulators are provided directly between the connection cables 4, 5 and the main pulling cable 6 or between the connection cables 4, 5 and the lower sides 1a, 1b of the main body K of the kite 1. In this embodiment, the regulators 2, 3 are arranged for decreasing and increasing the length (see arrows A) of a connection cable 4, 5 relative to the length of another one of said connection cables 4, 5. In another embodiment it is possible that the regulators 2, 3 are arranged for decreasing and increasing the length of an intermediate cable 24, 25 relative to the length of another one of said intermediate cables 24, 25. Also these regulators 2, 3 can be controlled by a control 7 in order to enable movement of the kite 1. In this embodiment the kite 1 moves as a result of the changes in length of the connection cables 4, 5.

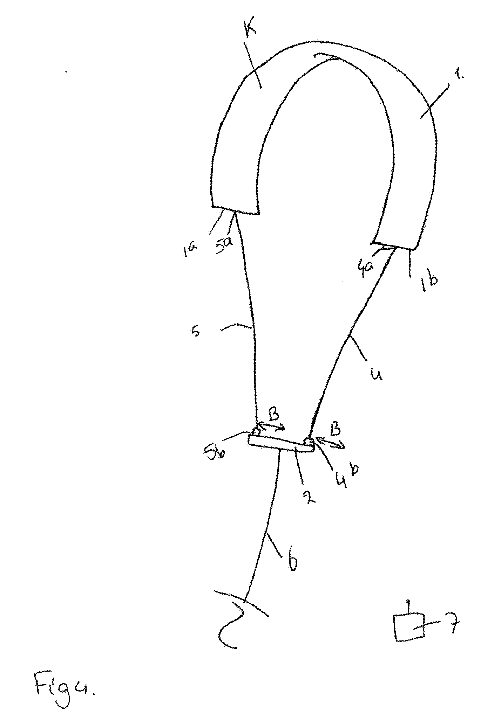

In figure 4 a third embodiment of the kite 1 according to the invention is shown. The main body K of the kite 1 is connected with its lower ends 1a, 1b to the first ends 4a, 5a of the connecting cables 4, 5. Only one regulator 2 is provided between the second ends 4b, 5b of the connecting cables 4, 5 and the main pulling cable 6. The regulator 2 is arranged for displacing the second end 4b, 5b of one of said connecting cables 4, 5 relative to the second end 4b, 5b of another one of said connecting cables 4, 5. The displacement of the respective second ends 4b, 5b is indicated in figure 4 by arrows B. By displacing at least one of the second ends 4b, 5b relative to the other second end 4b, 5b, the kite 1 will move. The regulator 2 can be controlled by a control 7 in order to move the second ends 4b, 5b relative to the regulator 2.

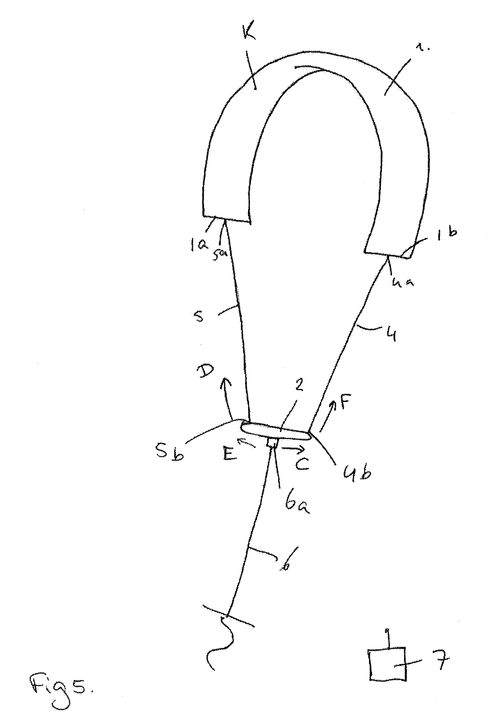

Figure 5 shows a fourth embodiment of the kite 1 according to the invention. The main body K of the kite 1 is connected with its lower ends 1a, 1b to the first ends 4a, 5a of the connecting cables 4, 5. Also only one regulator 2 is provided between the second ends 4b, 5b of the connecting cables 4, 5 and the main pulling cable 6. However, the second ends 4b, 5b of the connecting cables 4, 5 are fixedly connected to the regulator 2. A first end 6a of the main pulling cord 6 is movably connected to the regulator 2. By moving the first end 6a of the main pulling cord 6 relatively to the second ends 4b, 5b, thus at the same time also relatively to the regulator 2, the kite 1 is able to move. When the first end 6a of the main pulling cable 6 is moved towards the second end 4b of the first connection cable 4, the second end 5b of the second connection cable 5 will move in the direction of the main body K of the kite 1 (indicated by arrow D). When moving the first end 6a of the main pulling cable 6 towards the other second end 5b of the second connection cable 5, the second end 4b of the first connection cable 4 will move in direction F. It is clear that by moving the first end 6a of the main pulling cable 6 in one of the directions C or E, the kite 1 can be steered. A control 7 can be provided to control the regulator 2.

Although illustrative embodiments of the present invention have been described in greater detail with reference to the accompanying drawings, it is to be understood that the invention is not limited to these embodiments. Various changes or modifications may be effected by one skilled in the art without departing from the scope or the spirit of the invention as defined in the claims. It is also possible that the first connection cable is connected with one of its ends, being the second end to a first regulator, and the second connection cable 5 is connected with one of its ends, being the second end 5b to a second regulator, which regulator then are provided between the main pulling cable 6 and the connection cables. Also a single regulator can be used, wherein the second ends of the two connection cables are slidably arranged in the sliding mechanism. Also, the kite can be provided with different numbers of connecting cables or main pulling cables, for instance dual line kites or quad line kites. Furthermore, it is possible to vary in the location and number of the regulators, still providing an automatically steereable kite. It is also possible to design the regulator differently while maintaining its function.

## Claims

1. Kite having a main body provided with at least a first and a second connection cable and at least one main pulling cable, the at least first and second connection cables each having a first and a second end, the first ends of the at least first and second connection cables being connected to the main body of the kite at different positions of the main body, the second ends of the at least first and second connection cables being connected to the main pulling cable, wherein at least one regulator is provided between the first ends of the connection cables and the main body and/or between the second ends of the connection cables and the at least one main pulling cable, a control being provided for controlling the at least one regulator so that the kite is steereable.

2. Kite according to claim 1, wherein the at least one regulator is arranged for displacing the first end of one of said connecting cables relative to the first end of another one of said connecting cables.

3. Kite according to claim 1 or 2, wherein the at least one regulator is arranged for displacing the second end of one of said connecting cables relative to the second end of another one of said connecting cables.

4. Kite according to any one of claim 1-3, wherein the at least one regulator is arranged for decreasing and increasing the length of a connection cable relative to the length of another one of said connecting cables.

5. Kite according to any one of claims 1-4, wherein the first connection cable is connected with one of its ends to a first regulator and the second connection cable is connected with one of its ends to a second regulator.

6. Kite according to any one of claims 1-5, wherein the control is a wireless remote control, wherein the at least one regulator has its own power supply and a receiver and optionally a transmitter for wireless communication with the remote control.

7. Kite according to any one of claims 1-6, wherein the regulator comprises a sliding mechanism that provides sliding of the end of the connection cable relative to the regulator.

8. Kite according to anyone of claims 2-7, wherein in use a direction of displacement of the at least one end of the cable relative to another similar end of another cable, that are displaceable connected to the regulator, and/or a direction of displacement of the at least one end of the cable, that is displaceable connected to the regulator, relative to said regulator is substantially perpendicular to a direction of tensile force in said cable being displaced.

9. Kite according to anyone of the preceding claims, wherein the kite is provided with at least one sensor that is adapted to measure at least one parameter of the following: position of the kite, altitude of the kite, wind conditions.

10. Kite according to at least claim 9, wherein the control is adapted to control the at least one regulator in dependence of a measurement of the at least one sensor.

11. Kite according to at least claim 10, wherein the control is adapted to control the at least one regulator in dependence of controlling software.

12. Method of generating power, wherein the method comprises providing a kite according to any one of claims 1-11, connecting the main pulling cable of the kite to a power generator, controlling the kite so that a desired path of movement of the kite is obtained.

13. Method according to claim 12, wherein the controlling of the kite is such that during a first part of the desired path a high pulling force is exerted on the main pulling cable and that during a second part of the desired path a smaller pulling force is exerted on the main pulling cable, wherein during the first part the kite moves away from the power generator and wherein during the second part the kite moves towards the power generator.

14. Method of providing driving force to a vehicle, the method comprising providing a kite according to any one of claims 1-11, connecting the pulling cable of the kite to the vehicle and operating the control of the kite such that the vehicle is pulled by the pulling cable along a desired path with a desired speed.

15. Method according to claim 14, wherein the vehicle is chosen from the group consisting of a car, a bike, a buggy, a boat, an aircraft.

16. Vehicle provided with at least one kite according to any one of claims 1-11 for driving the vehicle.

17. Power generation assembly comprising a power generator and at least one kite according to any of claims 1-11 driveably connected to the power generator.
